# EUROPÄISCHE PATENTSCHRIFT

(11) **EP 2 772 587 B1**
(45) Veröffentlichungstag und Bekanntmachung des Hinweises auf die Patenterteilung: **19.08.2015**
(21) Anmeldenummer: 13001017.6
(22) Anmeldetag: 28.02.2013
(51) Int. Cl.: E02D 27/42

(54) **Verbindung zwischen einem Gründungspfahl eines Bauwerks, insbesondere eines Onshore- oder Offshore-Bauwerks, wie z. B. eine Onshore- oder Offshore-Windenergieanlage, mit einem insbesondere rohrförmigen Übergangsstück und Verfahren zur Herstellung derselben**
Connection between a foundation post of a structure, in particular an onshore or offshore construction, such as an onshore or offshore wind turbine, comprising in a particular tubular transition piece and method for manufacturing the same
Liaison entre un pieu de fondation d'une construction, notamment d'une construction sur terre ferme ou offshore, telle que par exemple une installation éolienne offshore ou sur terre ferme, comprenant une pièce de transition en particulier tubulaire et procédé de fabrication de celle-ci

(43) Veröffentlichungstag der Anmeldung: 03.09.2014
(73) Patentinhaber: Schultes, Klaus, 26607 Aurich (DE)
(72) Erfinder: Schultes, Klaus, 26607 Aurich (DE)
(74) Vertreter: Manasse, Uwe

(56) Entgegenhaltungen:
- EP-A2- 1 457 674
- WO-A1-2005/005752

## Beschreibung

Die vorliegende Erfindung betrifft eine Verbindung zwischen einem Gründungspfahl eines Bauwerks, insbesondere eines Onshore- oder Offshore-Bauwerks, wie z. B. eine Onshore- oder Offshore-Windenergieanlage, mit einem insbesondere rohrförmigen Übergangsstück. Bei sogenannten Grout-Verbindungen, auch Grouted Connections genannt, wird das Übergangsstück auch als "Transition Piece" bezeichnet. Das Übergangsstück kann beispielsweise als "Pin" oder als "Sleeve" ausgebildet sein.

Im Stand der Technik ist z. B. eine Verbindung zwischen einem "Monopile" und einem "Transition Piece" einer Windenergieanlage mittels einer Grout-Verbindung bekannt. Dabei handelt es sich um Rohr-In-Rohr-Steckverbindungen, bei der Stahlzylinder übereinander gefädelt werden. Der Zwischenraum wird mit hochfesten Mörteln vergossen. In diesen zusammenhang wird auf die WO 2005/005752 A1 verwiesen.

Ganz allgemein werden beim Vergrouten zwei üblicherweise rohrförmige Bauteile durch einen Spezialbeton oder -mörtel (Grout) miteinander verbunden. Hierzu wird die Groutmasse in einen im wesentlichen ringförmigen, unten abgedichteten Spalt (Zwischenraum) eingebracht und härtet dann aus. Während des Aushärteprozesses dürfen die Bauteile sich nicht bzw. nicht wesentlich gegeneinander bewegen, da die Groutmasse im Übergangszustand zwischen frisch und ausgehärtet eine zunächst deutlich reduzierte Tragfähigkeit aufweist und in Ruhe aushärten muss.

Die Bauteile werden beim Zusammenführen (vor dem Vergrouten) üblicherweise durch sogenannte Führungsknaggen grob zentriert und auf einen Mindestabstand gehalten. Diese Führungsknaggen können allerdings nicht dazu verwendet werden, jegliche Bewegung der Bauteile gegeneinander zu verhindern. Die Gründe hierfür sind:
1. Es muss genügend Spiel zwischen den Bauteilen bleiben, um diese überhaupt zusammenführen zu können;
2. Es sollte bei den Bauteilen keine direkte Berührung relativ starrer Metallteile zueinander bestehen, da dies zu lokalen Lastspitzen führen kann.

Eine derartige Relativbewegung tritt quasi zwangsläufig auf, wenn mehrere Stützen (Gründungspfähle/Gründungsrohre) eine gemeinsame Struktur tragen sollen und eine oder mehrere der Stützen dem Seegang ausgesetzt ist/sind. Als Beispiel ist eine sogenannte "Tripile"-Gründungsstruktur zu nennen. Bei sogenannten Monopiles (ein Gründungspfahl (Rammrohr) und ein darauf aufgesetztes Transition Piece)) ist diese Problematik prinzipiell auch durch Trägheitskräfte oder auch durch direkte Wellenbelastung des Transition Pieces gegeben.

Offshore lässt sich daher der Grout-Vorgang nur bei relativ geringem Seegang durchführen. Diese Wetterrestriktionen können die kostenintensiven Offshore-Arbeiten deutlich verlängern.

Der vorliegenden Erfindung liegt die somit die Aufgabe zugrunde, die Verbindung der eingangs genannten Art vor Schäden während des Aushärtens des hochfesten Betons oder Mörtels zu schützen.

Erfindungsgemäß wird diese Aufgabe gelöst durch eine Verbindung zwischen einem Gründungspfahl eines Bauwerks, insbesondere eines Onshore- oder Offshore-Bauwerks, wie z. B. eine Onshore- oder Offshore-Windenergieanlage, mit einem insbesondere rohrförmigen Übergangsstück, bei der der Gründungspfahl und des Übergangsstück mit einem Zwischenraum dazwischen übereinander gestülpt oder ineinander gesteckt sind und der Zwischenraum mit einem nach Aushärten hochfesten Beton oder Mörtel zumindest teilweise verfüllt ist, dadurch gekennzeichnet, dass zumindest während des Aushärtens im Zwischenraum eine erste Gruppe von vorzugsweise mindestens drei gegeneinander angeordneten Doppelkeilen, die im Abstand zueinander umlaufend angeordnet sind, und eine gegenüber der ersten Gruppe axial versetzt angeordnete zweite Gruppe von vorzugsweise mindestens drei jeweils gegeneinander angeordneten Doppelkeilen, die im Abstand zueinander umlaufend angeordnet sind, zur Unterdrückung oder Hemmung einer relativen Bewegung zwischen dem Gründungpfahl und dem Übergangsstück, insbesondere einer Kipp- und/oder horizontalen Translationsbewegung des Gründungspfahls, angeordnet sind. Der Gründungspfahl kann dabei z. B. rohrförmig oder zylinderförmig gestaltet sein. Das Übergangsstück kann ebenfalls z. B. rohrförmig oder zylinderförmig gestaltet sein. Der Zwischenraum ist üblicherweise ringförmig. Die Doppelkeile umfassen üblicherweise einen oberen und einen unteren Keil. Anstelle von einem axialen Versatz zwischen der ersten Gruppe und der zweiten Gruppe kann auch von einem Höhenversatz gesprochen werden.

Vorteilhafterweise sind die Doppelkeile einer jeweiligen Gruppe äquidistant über den Umfang angeordnet. Innerhalb einer Gruppe, aber auch zwischen den Gruppen können die Doppelkeile unterschiedlich gestaltet sein.

Die Doppelkeile dienen üblicherweise nicht zur Aufnahme des Eigengewichts des eigentlichen Bauwerks, wie z. B. eines Stützkreuzes und/oder eines Turms etc. Vielmehr sollen sie Einspannkräfte aufnehmen, die sich sonst in Verformung manifestieren würden. Das vorgenannte Eigengewicht wird üblicherweise von einer Abstützeinrichtung mit oder ohne Höhenverstellmöglichkeit aufgenommen.

Vorteilhafterweise sind die Doppelkeile einer Gruppe in einem großen vertikalen Abstand zu den Doppelkeilen der anderen Gruppe angeordnet.

Des weiteren wird die Aufgabe gelöst durch ein Verfahren zum Herstellen einer Verbindung zwischen einem Gründungspfahl eines Bauwerks, insbesondere eines Onshore- oder Offshore-Bauwerks, wie z. B. eine Onshore- oder Offshore-Windenergieanlage, mit einem insbesondere rohrförmigen Übergangsstück, insbesondere nach einem der vorangehenden Ansprüche, wobei das Verfahren umfasst: Übereinanderstülpen oder Ineinanderstecken des Gründungspfahls und des Übergangsstücks mit einem Zwischenraum dazwischen, zumindest teilweises Verfüllen des Zwischenraums mit einem nach Aushärten hochfesten Beton oder Mörtel und Aushärtenlassen des Betons oder Mörtels, gekennzeichnet durch vor dem Aushärtenlassen des Betons oder Mörtels Anordnen einer ersten Gruppe vorzugsweise mindestens drei jeweils gegeneinander angeordneten Doppelkeilen im Abstand zueinander umlaufend und eine gegenüber der ersten Gruppe axial versetzt angeordnete zweite Gruppe von vorzugsweise mindestens drei jeweils gegeneinander angeordneten Doppelkeilen im Abstand zueinander umlaufend in dem Zwischenraum zur Unterdrückung oder Hemmung einer relativen Bewegung zwischen dem Gründungspfahl und dem Übergangsstück, insbesondere einer Kipp- und/oder horizontalen Translationsbewegung des Gründungspfahls.

Bei der Verbindung kann vorgesehen sein, dass mindestens einer der Doppelkeile der ersten Gruppe und/oder mindestens einer der Doppelkeile der zweiten Gruppe selbsthemmend ausgeführt ist/sind. Dazu müssen die "Keilwinkel" der Keile eines jeweiligen Doppelkeils entsprechend (klein) gewählt werden. Z. B. kann/können die erste Gruppe von Doppelkeilen und/oder die zweite Gruppe von Doppelkeilen vor dem Einbringen des Betons oder Mörtels angeordnet werden.

Gemäß einer besonderen Ausführungsform der Erfindung ist/sind mindestens einer der Keile eines Doppelkeils der ersten Gruppe und/oder mindestens einer der Keile eines Doppelkeils der zweiten Gruppe vormontiert. Genauer gesagt kann mindestens einer der Keile eines Doppelkeils der ersten Gruppe und/oder mindestens einer der Keile eines Doppelkeils der zweiten Gruppe an dem Gründungspfahl oder dem Übergangsstück montiert sein.

Vorteilhafterweise ist/sind mindestens einer der Keile eines Doppelkeils der ersten Gruppe und/oder mindestens einer der Keile eines Doppelkeils der zweiten Gruppe während der Montage höhenverschiebbar gestaltet. Dadurch können die Keile während der Montage zusammengeschoben werden.

In einer weiteren besonderen Ausführungsform der Erfindung ist/sind mindestens ein Doppelkeil der ersten Gruppe und/oder mindestens ein Doppelkeil der zweiten Gruppe mit einer Einrichtung zum Einstellen eines definierten Abstands zwischen den beiden Keilen des jeweiligen Doppelkeils versehen.

Vorteilhafterweise ist/sind mindestens einer der Keile eines Doppelkeils der ersten Gruppe und/oder mindestens einer der Keile eines Doppelkeils der zweiten Gruppe mittels eines Magneten in seiner Höhenposition fixiert.

Vorteilhafterweise ist/sind mindestens einer der Keile eines Doppelkeils der ersten Gruppe und/oder mindestens einer der Keile eines Doppelkeils der zweiten Gruppe außerhalb des Bereiches mit dem Beton oder Mörtel angeordnet. Dadurch lässt/lassen sich der Keil/die Keile nach dem Aushärten des Betons oder Mörtels wieder entfernen.

Weiterhin kann vorgesehen sein, dass mindestens einer der Keile eines Doppelkeils der ersten Gruppe und/oder mindestens einer der Keile eines Doppelkeils der zweiten Gruppe innerhalb des Bereiches mit dem Beton oder Mörtel angeordnet ist/sind.

Ferner kann vorgesehen sein, dass während des Aushärtens eine Abstützeinrichtung zum Abstützen des Übergangsstücks auf dem Gründungspfahl angeordnet ist.

Vorteilhafterweise ist die Abstützeinrichtung auch zum Höhenverstellen des Übergangsstücks gestaltet.

Gemäß einer weiteren bevorzugten Ausführungsform ist die Steifigkeit mindestens eines der Keile eines Doppelkeils der ersten Gruppe und/oder die Steifigkeit mindestens eines der Keile eines Doppelkeils der zweiten Gruppe an die Steifigkeit des Betons oder Mörtels nach dem Aushärten angepasst. Dies ist insbesondere dann von Vorteil, wenn die Keile im eigentlichen Beton- oder Mörtelbereich verbleiben sollen, da durch vergleichbare Trag- und elastische Eigenschaften Spannungsspitzen vermieden werden. Grundsätzlich ist es von Vorteil, dass die Keile, damit sie nicht selber zu unkontrollierten Spannungsspitzen führen, in geeigneter Anzahl mit einer entsprechend dimensionierten Auflagefläche als gegeneinander angeordnete Doppelkeile ausgeführt sind. Die Steifigkeit der Keile kann beispielsweise durch einen geeigneten Werkstoff oder vorzugsweise durch eine Kombination von Werkstoffen (z. B. Stahl und Kunststoff) an die Steifigkeit des Betons oder Mörtels angepasst werden.

Vorteilhafterweise wird/werden bei dem Verfahren mindestens einer der Keile eines Doppelkeils der ersten Gruppe und/oder mindestens einer der Keile eines Doppelkeils der zweiten Gruppe durch Vormontieren an dem Gründungspfahl und/oder an dem Übergangsstück angeordnet wird/werden.

Günstigerweise wird mindestens einer der Doppelkeile durch Zusammenschieben der Keile des Doppelkeils relativ zueinander angeordnet.

Vorteilhafterweise wird mindestens einer der Doppelkeile nach dem Aushärten des Betons oder Mörtels wieder entfernt.

Außerdem kann vorgesehen sein, dass mindestens einer der Doppelkeile im Bereich des nachfolgend verfüllten Betons oder Mörtels angeordnet wird.

Schließlich kann auch vorgesehen sein, dass mindestens einer der Doppelkeile außerhalb des nachfolgend verfüllten Betons oder Mörtels angeordnet wird.

Der Erfindung liegt die überraschende Erkenntnis zugrunde, dass das noch vorhandene Spiel nach dem Ausrichten des Übergangsstücks durch die spezielle Keilkonstruktion (Doppelkeile) unterdrückt wird. Dadurch wird der Beton oder Mörtel vor Schäden durch eine Hin- und Herbewegung beispielsweise aufgrund des Seegangs während des Aushärtens geschützt.

Beispielsweise bei Monopiles können die Doppelkeile daneben auch zur Ausrichtung des Systems dienen.

Durch die Erfindung kann das Wetterfenster für einen derartigen Grout-Vorgang deutlich erweitert und die Grout-Verbindung vor Schäden während des Aushärtens geschützt werden.

Gemäß einer besonderen Ausführungsform ist es durch kontrolliertes Zusammenschieben der Keile jeweiliger Doppelkeile ebenfalls möglich, die Bauteile besser zueinander zu zentrieren bzw. im Falle von Monopiles auch komplett auszurichten.

Die Verbindung und das Verfahren können zumindest in besonderen Ausführungsformen sowohl für Monopiles auch für "Multi"-Piles, Tripoden, Jackets etc. verwendet werden.

Weitere Merkmale und Vorteile der Erfindung ergeben sich aus den beigefügten Ansprüchen und der nachfolgenden Beschreibung, in der mehrere Ausführungsbeispiele anhand der schematischen Zeichnungen im Einzelnen erläutert werden, in denen
- Fig. 1: eine Schnittansicht von einer Verbindung gemäß einer besonderen Ausführungsform der vorliegenden Erfindung zeigt;
- Fig. 2: eine Detailansicht von Fig. 1 zeigt;
- Fig. 3: einen Doppelkeil gemäß einer besonderen Ausführungsform der Erfindung in einer Ansicht wie Fig. 2 zeigt;
- Fig. 4: einen Doppelkeil mit Fixierung des unteren Keils gemäß einer besonderen Ausführungsform der Erfindung in einer Ansicht wie Fig. 2 zeigt; und
- Fig. 5: eine weitere besondere Ausführungsform eines Doppelkeils in einer Ansicht wie Fig. 2 zeigt.

In der nachfolgenden Beschreibung werden Gründungspfähle (Piles) in Form von Zylinderrohren gezeigt, in die von oben ein Übergangsstück gesteckt ist, das an seinem unteren Ende als ein Pin ausgebildet ist. Es gibt aber grundsätzlich auch die andere Möglichkeit, nämlich dass ein Übergangsstück, das an seinem unteren Ende als eine Hülse (Sleeve) ausgebildet ist, über einen Gründungspfahl, der z. B. als ein Zylinderrohr ausgebildet ist, gestülpt ist. Bei den zuletzt genannten, hier jedoch nicht gezeigten und beschriebenen Ausführungsbeispielen sind die Doppelkeile auch sinngemäß einsetzbar.

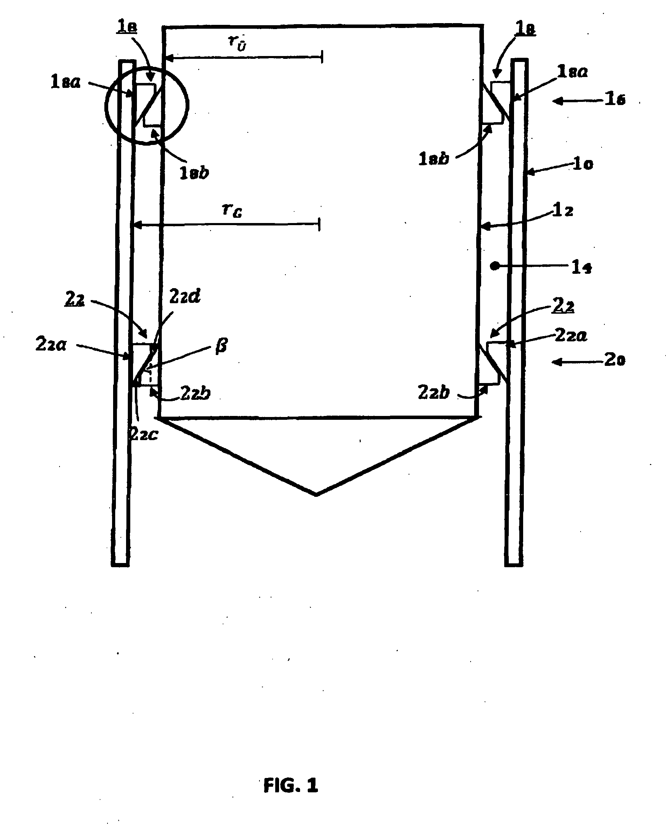

Zudem können die aufeinanderliegenden Flächen (Berührungsflächen) der Doppelkeile auch entgegengesetzt zu den in den Fig. 1 bis 5 gezeigten Ausführungsformen bezogen auf die Vertikale orientiert sein.

Fig. 1 zeigt eine Verbindung zwischen einem zylinderförmigen Gründungspfahl 10 einer Gründungsstruktur (nicht gezeigt) einer Offshore-Windenergieanlage (nicht gezeigt) mit einem im wesentlichen rohrförmigen Übergangsstück 12, das als ein Pin ausgebildet ist, bei der das Übergangsstück 12 mit einem Zwischenraum 14 dazwischen in den Gründungspfahl 10 gesteckt ist, gemäß einer besonderen Ausführungsform der vorliegenden Erfindung. In einer oberen Axialebene 16 sind mehrere Doppelkeile 18 (von denen nur zwei gezeigt bzw. sichtbar sind) vorzugsweise äquidistant umlaufend in dem ringförmigen Zwischenraum 14 und in einer unteren Axialebene 20 ebenfalls mehrere Doppelkeile 22 (von denen nur zwei gezeigt bzw. sichtbar sind) vorzugsweise äquidistant umlaufend in dem ringförmigen Zwischenraum 14 angeordnet. Die Doppelkeile 18 und 22 sind so gestaltet und angeordnet, dass darüber eine z. B. zentrale Ausrichtung des Übergangsstücks 12 in dem Gründungspfahl 10 sowie eine Unterdrückung oder Hemmung einer relativen Bewegung zwischen dem Gründungspfahl 10 und dem Übergangsstück 12 erfolgt.

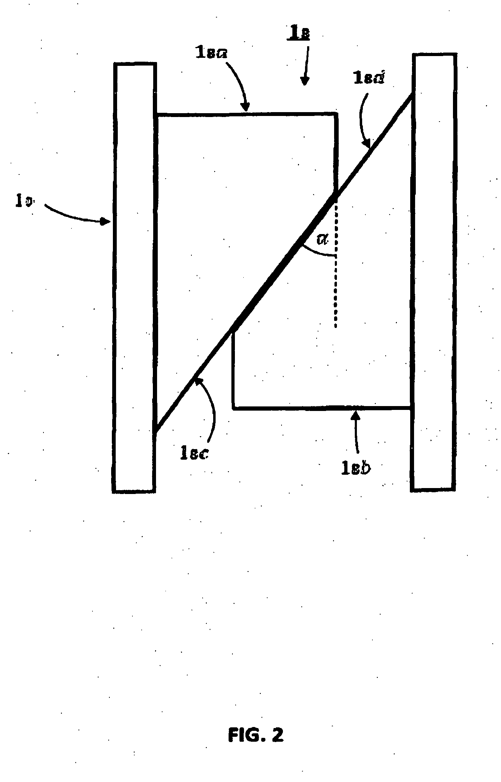

Jeder der Doppelkeile 18 bzw. 22 weist zwei gegeneinander angeordnete Keile 18a und 18b, 22a und 22b auf. Je nach der Größe des Keilwinkels a, den die miteinander in Berührung stehenden Berührungsflächen 18c und 18d der Keile 18a bzw. 18b und unter Umständen auch die Berührungsflächen 22c und 22d der 22a bzw. 22b bilden, können die Keile 18a und 18a bzw. 22a und 22b theoretisch aneinander gleiten (Gleitreibung) oder aber auch nicht (Haftreibung). Letztgenannter Fall wird auch als Selbsthemmung bezeichnet. Der Keilwinkel β der unteren Doppelkeile 22 ist in dem in den Fig. 1 und 2 gezeigten Ausführungsbeispiel mit dem Keilwinkel a identisch. Dies muss aber nicht der Fall sein.

In dem in den Fig. 1 und 2 gezeigten Ausführungsbeispiel verlaufen die Berührungsflächen 18d und 22d des jeweiligen inneren Keils 18b bzw. 22b von oben nach unten schräg nach außen und die Berührungsflächen 18c und 22c der äußeren Keile 18a und 22a entsprechend. Sie könnten jedoch in einem anderen Ausführungsbeispiel spiegelbildlich zur Vertikalen verlaufen.

Wie sich weiterhin insbesondere anhand der Fig. 2 ergibt, sind die maximalen Abmessungen der Keile 18a, 18b, 22a und 22b in radialer Richtung geringer als die Differenz zwischen dem Radius r_{G} des Gründungspfahls und dem Radius r_{Ü} des Übergangsstücks.

Des weiteren können die Keile 18a und 18b und die Keile 22a sowie 22b vormontiert oder aber erst während der Montage eingebaut bzw. werden.

In den Fig. 1 und 2 ist nicht dargestellt, dass das Übergangsstück 12 über beispielsweise eine Abstützeinrichtung in einer vorgegebenen bzw. vorgebbaren Höhe gehalten wird. Durch die Abstützeinrichtung müssen die Keile 18a, 18b, 22a und 22b nicht das Eigengewicht des weiteren darüber befindlichen Aufbaus, wie z. B. Turms etc. tragen.

In den Fig. 1 und 2 ist auch kein Grout in dem Zwischenraum 14 bzw. einem Teil davon gezeigt. Dennoch soll an dieser Stelle erwähnt werden, dass sich alle oder auch nur ein Teil der unteren Keile 22a und 22b und/oder alle der oberen Keile 18a und 18b innerhalb oder außerhalb eines Bereiches mit Grout befinden können.

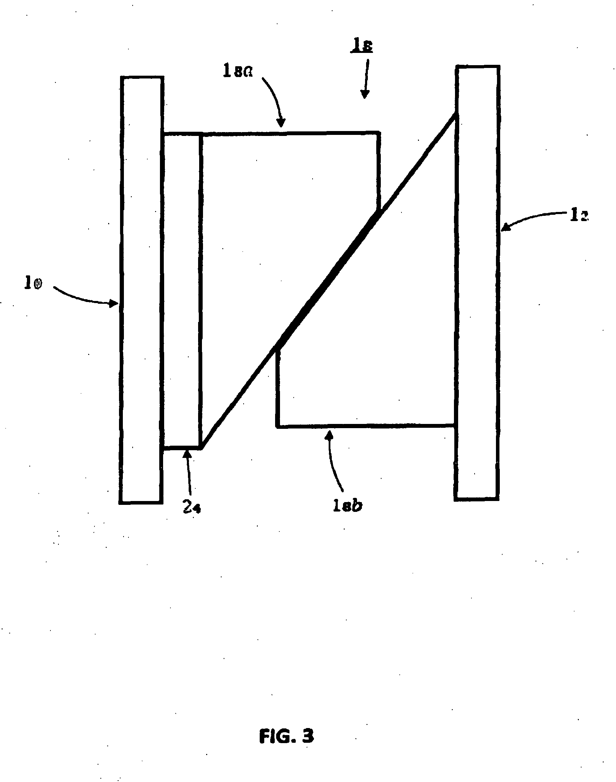

Bei der in Fig. 3 dargestellten Ausführungsform von Doppelkeilen ist der äußere Keil 18a aus einer Kombination von Werkstoffen, Stahl und Kunststoff, zur Anpassung der Steifigkeit desselben an diejenige des Grout-Materials angepasst worden. Besagter Keil 18b weist zum Gründungspfahl 10 hin eine Lage 24 aus Kunststoff auf, während der Rest des Keils aus Stahl besteht.

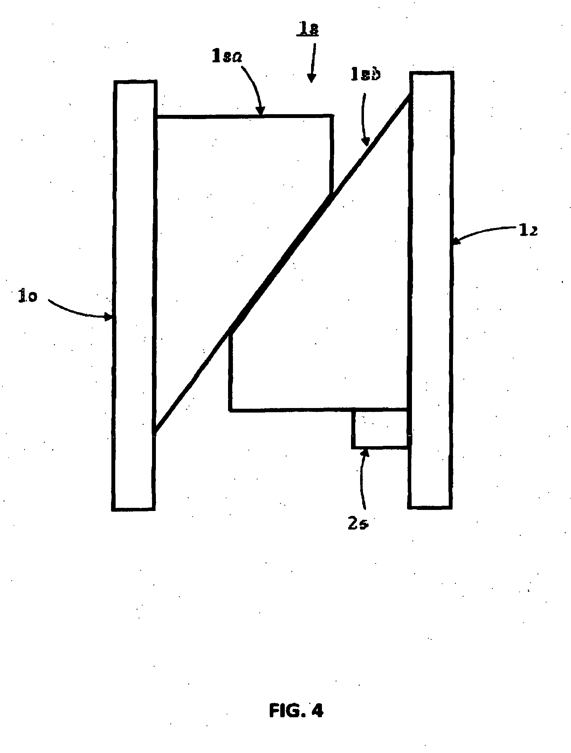

Bei der in Fig. 4 dargestellten weiteren Ausführungsform wird der untere, d. h. im vorliegenden Beispiel der zum Übergangsstück 12 liegende Keil 18b an seiner Unterseite durch einen Magneten 26, der an die Außenseite des Übergangsstücks 12 klemmbar ist, in seiner Höhenposition fixiert. Der Magnet 26 kann auch zum Fixieren von Führungen für Keile verwendet werden. Grundsätzlich kann der Magnet bzw. können Magneten beim oder nach dem endgültigen Ausrichten der Keile vorteilhaft eingesetzt werden, insbesondere wenn die Keile nur schwer vormontierbar sind.

Wenn die Keile vertikal kontrolliert bewegbar sind, können der Gründungspfahl 10 und das Übergangsstück 12 durch kontrolliertes Zusammenschieben von einem oder beiden Keilen eines Doppelkeils besser zueinander ausgerichtet werden bzw. im Falle von Monopiles auch komplett ausgerichtet werden.

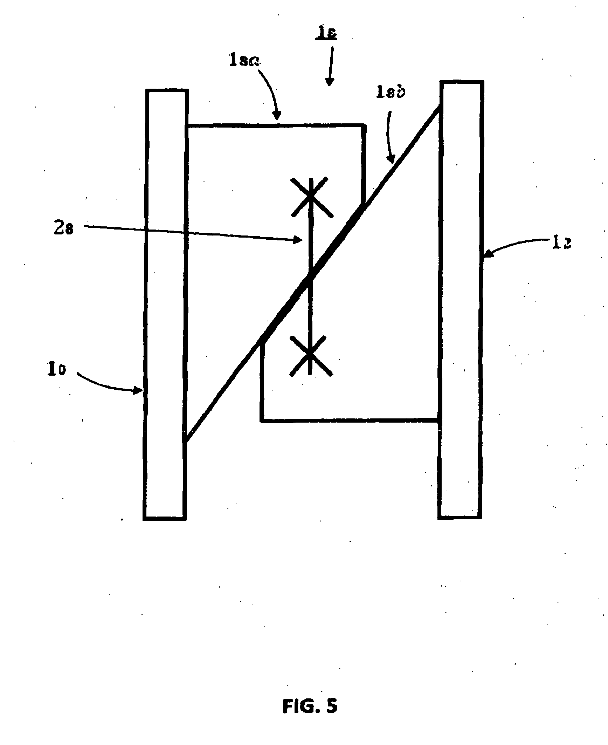

Schließlich wird in der Fig. 5 eine Ausführungsform gezeigt, bei der einem Doppelkeil 18 eine Einrichtung zum Einstellen eines definierten Abstands zwischen den beiden Keilen 18a und 18b in vertikaler Richtung zugeordnet ist. Diese Einrichtung ist nur schematisch dargestellt und mit der Bezugszahl 28 versehen.

In den vorangehend gezeigten Ausführungsformen können die Doppelkeile im Bereich des oberen und unteren Grout-Randes eingebaut sein. Je nach Ausführung können die Doppelkeile nach dem Aushärten des Grouts wieder entfernt werden oder am Einbauort verbleiben.

Gemäß einer besonderen Ausführungsform der vorliegenden Erfindung umfasst ein Verfahren zum Herstellen der oben beschriebenen Verbindungen, aber auch anderer erfindungsgemäßer Verbindungen:
Stecken des Übergangsstücks 12 in den Gründungspfahl 10 mit besagtem Zwischenraum 14 dazwischen, zumindest teilweises Verfüllen des Zwischenraumes 14 mit einem nach Aushärten hochfesten Beton (Grout), Anordnen einer ersten Gruppe von mehreren gegeneinander angeordneten Doppelkeilen, wie z. B. Doppelkeile 18 oder 22, im Abstand zueinander umlaufend und eine zweite Gruppe von mehreren Doppelkeilen im Abstand zueinander umlaufend, wie z. B. Doppelkeile 22 oder 18, in dem Zwischenraum 14 zur Unterdrückung oder Hemmung einer relativen Bewegung zwischen dem Gründungspfahl 10 und dem Übergangsstück 12, insbesondere einer Kipp- und/oder horizontalen Translationsbewegung des Gründungspfahls 10, und Aushärtenlassen des Betons.

Zur Montage der Doppelkeile bzw. Keile "von unten" könnte eine üblicherweise vorhandene untere Öffnung in dem Übergangsstück 12 genutzt werden.

Die Verbindung und das Verfahren ermöglichen eine Unterstützung einer Grout-Verbindung bzw. eine Grout-Fixierung.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### BEZUGSZEICHENLISTE

- 10: Gründungspfahl
- 12: Übergangsstück
- 14: Zwischenraum
- 16: obere Axialebene
- 18: Doppelkeile
- 18a, 18b: Keile
- 18c, 18d: Berührungsflächen
- 20: untere Axialebene
- 22: Doppelkeile
- 22a, 22b: Keile
- 22c, 22d: Berührungsflächen
- 24: Lage
- 26: Magnet
- 28: Einrichtung zum Einstellen eines definierten Abstands
- a, ß: Keilwinkel
- r_{G}: Radius des Gründungspfahls
- r_{Ü}: Radius des Übergangsstücks

## Patentansprüche

1. Verbindung zwischen einem Gründungspfahl eines Bauwerks, insbesondere eines Onshore- oder Offshore-Bauwerks, wie z. B. eine Onshore- oder Offshore- Windenergieanlage, mit einem insbesondere rohrförmigen Übergangsstück, bei der der Gründungspfahl und das Übergangsstück mit einem Zwischenraum dazwischen übereinander gestülpt oder ineinander gesteckt sind und der Zwischenraum mit einem nach Aushärten hochfesten Beton oder Mörtel zumindest teilweise verfüllt ist,
**dadurch gekennzeichnet, dass**
zumindest während des Aushärtens im Zwischenraum eine erste Gruppe von vorzugsweise mindestens drei gegeneinander angeordneten Doppelkeilen, die im Abstand zueinander umlaufend angeordnet sind, und eine gegenüber der ersten Gruppe axial versetzt angeordnete zweite Gruppe von vorzugsweise mindestens drei jeweils gegeneinander angeordneten Doppelkeilen, die im Abstand zueinander umlaufend angeordnet sind, zur Unterdrückung oder Hemmung einer relativen Bewegung zwischen dem Gründungpfahl und dem Übergangsstück, insbesondere einer Kipp- und/oder horizontalen Translationsbewegung des Gründungspfahls, angeordnet sind.

2. Verbindung nach Anspruch 1, **dadurch gekennzeichnet, dass** mindestens einer der Doppelkeile der ersten Gruppe und/oder mindestens einer der Doppelkeile der zweiten Gruppe selbsthemmend ausgeführt ist/sind.

3. Verbindung nach Anspruch 1 oder 2, **dadurch gekennzeichnet, dass** mindestens einer der Keile eines Doppelkeils der ersten Gruppe und/oder mindestens einer der Keile eines Doppelkeils der zweiten Gruppe vormontiert ist/sind.

4. Verbindung nach einem der Ansprüche 1 bis 3, **dadurch gekennzeichnet, dass** mindestens einer der Keile eines Doppelkeils der ersten Gruppe und/oder mindestens einer der Keile eines Doppelkeils der zweiten Gruppe während der Montage höhenverschiebbar gestaltet ist/sind.

5. Verbindung nach einem der vorangehenden Ansprüche, **dadurch gekennzeichnet, dass** mindestens ein Doppelkeil der ersten Gruppe und/oder mindestens ein Doppelkeil der zweiten Gruppe mit einer Einrichtung zum Einstellen eines definierten Abstands zwischen den beiden Keilen des jeweiligen Doppelkeils versehen ist.

6. Verbindung nach einem der vorangehenden Ansprüche, **dadurch gekennzeichnet, dass** mindestens einer der Keile eines Doppelkeils der ersten Gruppe und/oder mindestens einer der Keile eines Doppelkeils der zweiten Gruppe mittels eines Magneten in seiner Höhenposition fixiert ist/sind.

7. Verbindung nach einem der vorangehenden Ansprüche, **dadurch gekennzeichnet, dass** mindestens einer der Keile eines Doppelkeils der ersten Gruppe und/oder mindestens einer der Keile eines Doppelkeils der zweiten Gruppe außerhalb des Bereiches mit dem Beton oder Mörtel angeordnet ist/sind.

8. Verbindung nach einem der vorangehenden Ansprüche, **dadurch gekennzeichnet, dass** mindestens einer der Keile eines Doppelkeils der ersten Gruppe und/oder mindestens einer der Keile eines Doppelkeils der zweiten Gruppe innerhalb des Bereiches mit dem Beton oder Mörtel angeordnet ist/sind.

9. Verbindung nach einem der vorangehenden Ansprüche, **dadurch gekennzeichnet, dass** während des Aushärtens eine Abstützeinrichtung zum Abstützen des Übergangsstücks auf dem Gründungspfahl angeordnet ist.

10. Verbindung nach Anspruch 8, **dadurch gekennzeichnet, dass** die Abstützeinrichtung auch zum Höhenverstellen des Übergangsstücks gestaltet ist.

11. Verbindung nach einem der vorangehenden Ansprüche, **dadurch gekennzeichnet, dass** die Steifigkeit mindestens eines der Keile eines Doppelkeils der ersten Gruppe und/oder die Steifigkeit mindestens eines der Keile eines Doppelkeils der zweiten Gruppe an die Steifigkeit des Betons oder Mörtels nach dem Aushärten angepasst ist.

12. Verfahren zum Herstellen einer Verbindung zwischen einem Gründungspfahl eines Bauwerks, insbesondere eines Onshore- oder Offshore-Bauwerks, wie z. B. eine Onshore- oder Offshore-Windenergieanlage, mit einem insbesondere rohrförmigen Übergangsstück, insbesondere nach einem der vorangehenden Ansprüche, wobei das Verfahren umfasst:
- Übereinanderstülpen oder Ineinanderstecken des Gründungspfahls und des Übergangsstücks mit einem Zwischenraum dazwischen,
- zumindest teilweises Verfüllen des Zwischenraums mit einem nach Aushärten hochfesten Beton oder Mörtel und
- Aushärtenlassen des Betons oder Mörtels,
**gekennzeichnet durch** vor dem Aushärtenlassen des Betons oder Mörtels Anordnen einer ersten Gruppe vorzugsweise mindestens drei jeweils gegeneinander angeordneten Doppelkeilen im Abstand zueinander umlaufend und eine gegenüber der ersten Gruppe axial versetzt angeordnete zweite Gruppe von vorzugsweise mindestens drei jeweils gegeneinander angeordneten Doppelkeilen im Abstand zueinander umlaufend in dem Zwischenraum zur Unterdrückung oder Hemmung einer relativen Bewegung zwischen dem Gründungspfahl und dem Übergangsstück, insbesondere einer Kipp- und/oder horizontalen Translationsbewegung des Gründungspfahls.

13. Verfahren nach Anspruch 12, **dadurch gekennzeichnet, dass** mindestens einer der Keile eines Doppelkeils der ersten Gruppe und/oder mindestens einer der Keile eines Doppelkeils der zweiten Gruppe durch Vormontieren an dem Gründungspfahl und/oder an dem Übergangsstück angeordnet wird/werden.

14. Verfahren nach Anspruch 11 oder 12, **dadurch gekennzeichnet, dass** mindestens einer der Doppelkeile durch Zusammenschieben der Keile des Doppelkeils relativ zueinander angeordnet wird.

15. Verfahren nach einem der Ansprüche 12 bis 14, **dadurch gekennzeichnet, dass** mindestens einer der Doppelkeile nach dem Aushärten des Betons oder Mörtels wieder entfernt wird.

16. Verfahren nach einem der Ansprüche 12 bis 15, **dadurch gekennzeichnet, dass** mindestens einer der Doppelkeile im Bereich des nachfolgend verfüllten Betons oder Mörtels angeordnet wird.

17. Verfahren nach einem der Ansprüche 12 bis 15, **dadurch gekennzeichnet, dass** mindestens einer der Doppelkeile außerhalb des nachfolgend verfüllten Betons oder Mörtels angeordnet wird.

## Claims

1. Connection between a foundation pile of a structure, in particular an onshore or offshore structure, such as, for example, an onshore or offshore wind turbine, and an in particular tubular transition piece, in which the foundation pile and the transition piece are fitted one over the other or plugged one inside the other with an interspace therebetween and the interspace is at least partially filled with a concrete or mortar which has a high strength after curing,
**characterized in that**,
at least during curing, there are arranged in the interspace a first group of preferably at least three double wedges which are arranged against one another and which are arranged to run around at a distance from one another, and a second group, arranged axially offset with respect to the first group, of preferably at least three double wedges which are in each case arranged against one another and which are arranged to run around at a distance from one another, in order to suppress or inhibit a relative movement between the foundation pile and the transition piece, in particular a tilting and/or horizontal translational movement of the foundation pile.

2. Connection according to Claim 1, **characterized in that** at least one of the double wedges of the first group and/or at least one of the double wedges of the second group is/are designed to be self-locking.

3. Connection according to Claim 1 or 2, **characterized in that** at least one of the wedges of a double wedge of the first group and/or at least one of the wedges of a double wedge of the second group is/are premounted.

4. Connection according to one of Claims 1 to 3, **characterized in that** at least one of the wedges of a double wedge of the first group and/or at least one of the wedges of a double wedge of the second group is/are configured to be height-displaceable during mounting.

5. Connection according to one of the preceding claims, **characterized in that** at least one double wedge of the first group and/or at least one double wedge of the second group is/are provided with a device for setting a defined distance between the two wedges of the respective double wedge.

6. Connection according to one of the preceding claims, **characterized in that** at least one of the wedges of a double wedge of the first group and/or at least one of the wedges of a double wedge of the second group is/are fixed in its height position by means of a magnet.

7. Connection according to one of the preceding claims, **characterized in that** at least one of the wedges of a double wedge of the first group and/or at least one of the wedges of a double wedge of the second group is/are arranged outside the region containing the concrete or mortar.

8. Connection according to one of the preceding claims, **characterized in that** at least one of the wedges of a double wedge of the first group and/or at least one of the wedges of a double wedge of the second group is/are arranged inside the region containing the concrete or mortar.

9. Connection according to one of the preceding claims, **characterized in that**, during curing, a supporting device is arranged to support the transition piece on the foundation pile.

10. Connection according to Claim 8, **characterized in that** the supporting device is also designed to adjust the transition piece in height.

11. Connection according to one of the preceding claims, **characterized in that** the stiffness of at least one of the wedges of a double wedge of the first group and/or the stiffness of at least one of the wedges of a double wedge of the second group is/are adapted to the stiffness of the concrete or mortar after curing.

12. Method for producing a connection between a foundation pile of a structure, in particular an onshore or offshore structure, such as, for example, an onshore or offshore win turbine, and an in particular tubular transition piece, in particular according to one of the preceding claims, wherein the method comprises:
- fitting the foundation pile and the transition piece one over the other or plugging them one inside the other with an interspace therebetween,
- at least partially filling the interspace with a concrete or mortar which has a high strength after curing, and
- leaving the concrete or mortar to cure, **characterized by**, before allowing the concrete or mortar to cure, arranging in the interspace a first group of preferably at least three double wedges which are arranged in each case against one another and run around at distance from one another, and a second group, arranged offset axially with respect to the first group, of preferably at least three double wedges which are in each case arranged against one another and run around at a distance from one another, in order to suppress or inhibit a relative movement between the foundation pile and the transition piece, in particular a tilting and/or horizontal translation movement of the foundation pile.

13. Method according to Claim 12, **characterized in that** at least one of the wedges of a double wedge of the first group and/or at least one of the wedges of a double wedge of the second group is/are arranged by premounting on the foundation pile and/or on the transition piece.

14. Method according to Claim 11 or 12, **characterized in that** at least one of the double wedges is arranged by the wedges of the double wedge being pushed together relative to one another.

15. Method according to one of Claims 12 to 14, **characterized in that** at least one of the double wedges is removed again after the concrete or mortar has cured.

16. Method according to one of Claims 12 to 15, **characterized in that** at least one of the double wedges is arranged in the region of the subsequently filled concrete or mortar.

17. Method according to one of Claims 12 to 15, **characterized in that** at least one of the double wedges is arranged outside of the subsequently filled concrete or mortar.

## Revendications

1. Liaison entre un pieu de fondation d'une construction, notamment d'une construction sur terre ferme ou offshore, telle que par exemple une installation éolienne sur terre ferme ou offshore, avec une pièce de transition en particulier tubulaire, dans laquelle le pieu de fondation et la pièce de transition sont engagés l'un sur l'autre à recouvrement ou emboîtés l'un dans l'autre avec un espace intermédiaire entre eux et l'espace intermédiaire est rempli au moins en partie avec un béton ou un mortier à haute résistance après prise, **caractérisée en ce qu'**au moins pendant la prise, un premier groupe de préférence d'au moins trois doubles coins disposés l'un en face de l'autre, qui sont disposés en périphérie à distance l'un de l'autre, et un deuxième groupe, positionné en décalage axial par rapport au premier groupe, de préférence d'au moins trois doubles coins disposés respectivement l'un en face de l'autre, qui sont disposés en périphérie à distance l'un de l'autre, sont disposés dans l'espace intermédiaire pour empêcher ou arrêter un mouvement relatif entre le pieu de fondation et la pièce de transition, en particulier un mouvement de basculement et/ou de translation horizontale du pieu de fondation.

2. Liaison selon la revendication 1, **caractérisée en ce qu'**au moins un des doubles coins du premier groupe et/ou au moins un des doubles coins du deuxième groupe est/sont autobloquant(s).

3. Liaison selon la revendication 1 ou 2, **caractérisée en ce qu'**au moins un des coins d'un double coin du premier groupe et/ou au moins un des coins d'un double coin du deuxième groupe est/sont pré-monté(s).

4. Liaison selon l'une quelconque des revendications 1 à 3, **caractérisée en ce qu'**au moins un des coins d'un double coin du premier groupe et/ou au moins un des coins d'un double coin du deuxième groupe est/sont réglable(s) en hauteur pendant le montage.

5. Liaison selon l'une quelconque des revendications précédentes, **caractérisée en ce qu'**au moins un double coin du premier groupe et/ou au moins un double coin du deuxième groupe est muni d'un dispositif pour le réglage d'une distance définie entre les deux coins du double coin respectif.

6. Liaison selon l'une quelconque des revendications précédentes, **caractérisée en ce qu'**au moins un des coins d'un double coin du premier groupe et/ou au moins un des coins d'un double coin du deuxième groupe est/sont fixé(s) dans sa/leur position au moyen d'un aimant.

7. Liaison selon l'une quelconque des revendications précédentes, **caractérisée en ce qu'**au moins un des coins d'un double coin du premier groupe et/ou au moins un des coins d'un double coin du deuxième groupe est/sont disposé(s) à l'extérieur de la région contenant le béton ou le mortier.

8. Liaison selon l'une quelconque des revendications précédentes, **caractérisée en ce qu'**au moins un des coins d'un double coin du premier groupe et/ou au moins un des coins d'un double coin du deuxième groupe est/sont situé(s) à l'intérieur de la région contenant le béton ou le mortier.

9. Liaison selon l'une quelconque des revendications précédentes, **caractérisée en ce qu'**un dispositif de soutien est disposé sur le pieu de fondation pendant la prise pour soutenir la pièce de transition.

10. Liaison selon la revendication 8, **caractérisée en ce que** le dispositif de soutien est également configuré de façon à régler en hauteur la pièce de transition.

11. Liaison selon l'une quelconque des revendications précédentes, **caractérisée en ce que** la rigidité d'au moins un des coins d'un double coin du premier groupe et/ou la rigidité d'au moins un des coins d'un double coin du deuxième groupe est adaptée à la rigidité du béton ou du mortier après la prise.

12. Procédé de fabrication d'une liaison entre un pieu de fondation d'une construction, notamment d'une construction sur terre ferme ou offshore, telle que par exemple une installation éolienne sur terre ferme ou offshore, avec une pièce de transition en particulier tubulaire, en particulier selon l'une quelconque des revendications précédentes, dans lequel le procédé comprend les étapes suivantes:
- engager l'un sur l'autre à recouvrement ou emboîter l'un dans l'autre le pieu de fondation et la pièce de transition avec un espace intermédiaire entre les deux,
- remplir au moins en partie l'espace intermédiaire avec un béton ou un mortier à haute résistance après prise, et
- laisser durcir le béton ou le mortier,
**caractérisé en ce que**, avant de laisser durcir le béton ou le mortier, on dispose un premier groupe de préférence d'au moins trois doubles coins disposés respectivement l'un en face de l'autre à distance l'un de l'autre en direction périphérique et un deuxième groupe, positionné en décalage axial par rapport au premier groupe, de préférence d'au moins trois doubles coins disposés respectivement l'un en face de l'autre à distance l'un de l'autre en direction périphérique, dans l'espace intermédiaire pour empêcher ou arrêter un mouvement relatif entre le pieu de fondation et la pièce tubulaire, en particulier un mouvement de basculement et/ou de translation horizontale du pieu de fondation.

13. Procédé selon la revendication 12, **caractérisé en ce que** l'on dispose au moins un des coins d'un double coin du premier groupe et/ou au moins un des coins d'un double coin du deuxième groupe par pré-montage sur le pieu de fondation et/ou sur la pièce de transition.

14. Procédé selon la revendication 11 ou 12, **caractérisé en ce que** l'on dispose au moins un des doubles coins en faisant glisser les coins du double coin l'un par rapport à l'autre.

15. Procédé selon l'une quelconque des revendications 12 à 14, **caractérisé en ce que** l'on enlève de nouveau au moins un des doubles coins après la prise du béton ou du mortier.

16. Procédé selon l'une quelconque des revendications 12 à 15, **caractérisé en ce que** l'on dispose au moins un des doubles coins dans la région du béton ou du mortier déversé ultérieurement.

17. Procédé selon l'une quelconque des revendications 12 à 15, **caractérisé en ce que** l'on dispose au moins un des doubles coins à l'extérieur du béton ou du mortier déversé ultérieurement.
